# EUROPÄISCHE PATENTSCHRIFT

(11) **EP 4 378 295 B1**
(45) Veröffentlichungstag und Bekanntmachung des Hinweises auf die Patenterteilung: **05.03.2025**
(21) Anmeldenummer: 23208584.5
(22) Anmeldetag: 08.11.2023
(51) Int. Cl.: A01C 23/00, A01C 23/04

(54) **VORRICHTUNG ZUM AUSBRINGEN VON EXTRAKTEN UND VERFAHREN ZU DEREN BETRIEB**
DEVICE FOR DISTRIBUTING EXTRACTS AND METHOD FOR OPERATING SAME
DISPOSITIF D'EXTRACTION D'EXTRAITS ET SON PROCÉDÉ DE FONCTIONNEMENT

(30) Priorität: 30.11.2022 DE 102022131701
(43) Veröffentlichungstag der Anmeldung: 05.06.2024
(73) Patentinhaber: Kumm Technik GmbH, 56593 Krunkel (DE)
(72) Erfinder: Kumm, Michael, 57635 Hasselbach (DE)
(74) Vertreter: Hannke, Christian

(56) Entgegenhaltungen:
- EP-B1- 1 157 601
- DE-A1- 102004 053 085
- DE-U- 1 922 762
- US-A1- 2016 183 449

## Beschreibung

Die vorliegende Erfindung bezieht sich auf eine Vorrichtung zum Ausbringen eines eines Extrakts auf landwirtschaftliche Nutzflächen und ein Verfahren zum Betreiben einer solchen Vorrichtung.

Aus dem Stand der Technik sind Vorrichtungen zum Ausbringen von Extrakten, auch als Gülle bezeichnet, seit langem bekannt. Dabei werden üblicherweise ausgehend von einem Tank eine Vielzahl von Ausbringleitungen eingesetzt. Ausgehend von dem Tank wird üblicherweise das Extrakt zu einem oder mehreren Verteilern gefördert, welche es wiederum auf die einzelnen Ausgänge verteilen.

DE1922762U offenbart eine fahrbare Saug-Druck-Einrichtung für die Förderung und Ausbringung von u.a. Schlamm- und Flüssigstoffen.

EP1157601B1 offenbart ein Pumpenaggregat mit einer Kombination aus Kreiselpumpe und Entlüftungspumpe zum Ansaugen und Fördern eines Mediums, insbesondere Gülle.

DE102004053085A1 offenbart ein Gülleausbringfahrzeug mit einem Güllefass und wenigstens einem Gülleverteiler.

US020160183449A1 offenbart eine Einbringvorrichtung sowie eine Verteilvorrichtung zum Einbringen von Festmist in eine Bodenschicht.

Eine Problematik beim Betrieb derartiger Anlagen ist der Umstand, dass deren Tanks gefüllt werden müssen. Zu diesem Zweck sind mehrere Befüllungsmechanismen bekannt, beispielsweise Zuführöffnungen, mit Kränen betätigte Zuführungen und dergleichen. Dabei ist es bekannt, dass das Extrakt der Vorrichtung zugeführt wird und anschließend mittels einer Pumpe letztlich zu dem Tank verbracht wird. Dieser Prozess ist vergleichsweise aufwendig und hängt auch sehr stark von dem verwendeten Pumpentyp ab. So können einige Pumpen erst arbeiten, wenn sie bereits mit dem zu fördernden Gut befüllt sind oder dieses zumindest an diesen anliegt. Andere Pumpen können auch bei nicht Anliegen eines Produkts arbeiten, haben jedoch teilweise eine eher begrenzte Förderleistung.

Der vorliegenden Erfindung liegt daher die Aufgabe zugrunde, die Befüllung von derartigen Vorrichtungen bzw. deren Tanks zu erleichtern. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Ausbringen eines fließfähigen Mediums, insbesondere eines Extrakts auf landwirtschaftliche Nutzflächen, weist eine Ausbringeinrichtung und ein erstes Reservoir zur Aufnahme des Extrakts auf. Weiterhin ist eine Zufuhröffnung und/oder eine Zuführeinrichtung vorgesehen, um der Vorrichtung und/oder dem Reservoir das Extrakt (wenigstens mittelbar) zuzuführen, und es ist eine erste Fördereinrichtung vorgesehen, um das Extrakt zu dem ersten Reservoir zu fördern. Ebenso weist die Vorrichtung eine Ventileinrichtung auf. Dabei ist insbesondere der Fördereinrichtung diese Ventileinrichtung nachgeordnet, welche dazu geeignet und bestimmt ist, Extrakt wahlweise zu dem ersten Reservoir oder zu einer Ausbringeinrichtung zu fördern. Des Weiteren weist die Vorrichtung ein zweites Reservoir auf, welches in Strömungsverbindung mit der Zufuhröffnung und/oder der Zuführeinrichtung bringbar ist und welches in einer Strömungsrichtung des Extrakts stromabwärts bzw. nach der Zufuhröffnung und/oder nach der Zuführeinrichtung angeordnet ist, wobei die erste Fördereinrichtung dazu geeignet und bestimmt ist, das Extrakt wenigstens zeitweise von dem zweiten Reservoir zu dem ersten Reservoir zu fördern.

Erfindungsgemäß weist die Vorrichtung eine Förderleitung auf, welche dazu geeignet und bestimmt ist, das Extrakt wenigstens zeitweise von dem ersten Reservoir zu dem zweiten Reservoir zu fördern, wobei bevorzugt diese Förderleitung absperrbar ist, derart, dass das Extrakt nicht zwischen dem ersten und dem zweiten Reservoir durch diese Förderleitung strömen kann. Dabei ist das zweite Reservoir tiefer angeordnet als das erste Reservoir.

Diese Förderleitung dient insbesondere dazu, um in einem Arbeitsbetrieb das Extrakt ausgehend von dem ersten Reservoir (insbesondere durch das zweite Reservoir hindurch) auszubringen.

Besonders bevorzugt verbindet diese Förderleitung das erste Reservoir und das zweite Reservoir unmittelbar, d. h. insbesondere ohne weitere Elemente wie Pumpen oder dergleichen dazwischen. Bevorzugt ist jedoch in dieser Förderleitung eine Ventileinrichtung angeordnet.

Es wird daher vorgeschlagen, ein zweites Reservoir, beispielsweise ein Zwischenbehältnis vorzusehen, welches insbesondere auch zur verbesserten Förderung des Extrakts dient.

Bevorzugt weist dieses zweite Reservoir wenigstens eine Zuführung und/oder einen Eingang auf. Bei einer weiteren bevorzugten Ausführungsform weist das zweite Reservoir eine Abführung und/oder einen Ausgang auf.

Bevorzugt weist das zweite Reservoir eine zweite Zuführung auf, welche wie unten ausgeführt insbesondere in Strömungsverbindung mit dem ersten Reservoir bringbar ist.

Bei einer bevorzugten Ausführungsform handelt es sich bei der Fördereinrichtung um eine Pumpe.

Besonders bevorzugt, handelt es sich bei dem ersten Reservoir um einen Haupthahn, der zur Aufnahme des Mediums, d. h. des Extrakts dient.

Besonders bevorzugt, handelt es sich beim ersten Reservoir um einen Haupttank der Vorrichtung, der daher auch ein wesentlich größeres Fassungsvermögen aufweist, als das zweite Reservoir. Bevorzugt ist das Volumen des ersten Reservoirs wenigstens doppelt so groß wie das Volumen des zweiten Reservoirs, bevorzugt wenigstens dreimal so groß, bevorzugt wenigstens viermal so groß, bevorzugt wenigstens sechsmal so groß und bevorzugt wenigstens 10mal so groß.

Bei dem zweiten Reservoir handelt es sich um einen Zwischenspeicher oder eine Sammelkiste.

Bevorzugt weist das zweite Reservoir ein Volumen auf, welches größer ist als 2dm³ bevorzugt größer als 4dm³ bevorzugt größer als 8dm³ bevorzugt größer als 15dm³ , bevorzugt größer als 20dm³ , bevorzugt größer als 40dm³ , bevorzugt größer als 60dm³ und besonders bevorzugt größer als 80dm³ .

Bevorzugt weist das zweite Reservoir ein Volumen auf, welches kleiner ist als 600dm³ bevorzugt kleiner als 500dm³ bevorzugt kleiner als 300dm³ bevorzugt kleiner als 200dm³ , und besonders bevorzugt größer als 150dm³ .

Bei einer bevorzugten Ausführungsform weist die Vorrichtung eine zweite Förderleitung auf, welche dazu geeignet und bestimmt ist, das Extrakt wenigstens zeitweise von dem zweiten Reservoir zu dem ersten Reservoir zu fördern, wobei bevorzugt diese zweite Förderleitung absperrbar ist, derart, dass das Extrakt nicht zwischen dem zweiten und dem ersten Reservoir durch diese Förderleitung strömen kann.

Diese Förderleitung dient insbesondere dazu, um das erste Reservoir zu befüllen.

Besonders bevorzugt ist in dem zweiten Förderbetrieb die Förderleitung und/oder diese zweite Förderleitung wenigstens zeitweise geöffnet und wenigstens zeitweise geschlossen.

Bei einer weiteren bevorzugten Ausführungsform weist die Vorrichtung eine zweite Fördereinrichtung zum Fördern des Extrakts auf.

Bei einer weiteren bevorzugten Ausführungsform arbeiten die erste Fördereinrichtung und die zweite Fördereinrichtung nach unterschiedlichen Wirkprinzipien. So kann es sich beispielsweise bei der ersten (oder der zweiten) Fördereinrichtung um eine Pumpe handeln, welche erst dann ein Medium fördern kann, wenn dieses an ihr anliegt.

Bei der zweiten (oder der ersten) Pumpe bzw. Fördereinrichtung kann es sich insbesondere um eine frühere Einrichtung handeln, welche auch arbeiten kann, ohne dass Substanz an ihr anliegt, beispielsweise indem sie dieses ansaugt.

Besonders bevorzugt wird die genannte zweite Fördereinrichtung bei der Inbetriebnahme oder am Anfang eingesetzt, um die Substanz, insbesondere zu dem zweiten Reservoir zu fördern. Die zweite Pumpeinrichtung bzw. Fördereinrichtung wird bevorzugt später eingesetzt.

Bei einer bevorzugten Ausführungsform sind die beiden Pumpen parallel angeordnet, insbesondere, sodass jede dieser Pump - oder Fördereinrichtungen, unabhängig von dem Betrieb der anderen Pumpeinrichtungen fördern kann.

Besonders bevorzugt unterscheidet sich ein Strömungspfad, entlang dessen die erste Pumpe das Extrakt von dem zweiten Reservoir zum ersten Reservoir fördert, wenigstens abschnittsweise von dem Pfad, entlang dessen die zweite Pumpeinrichtung bzw. Fördereinrichtung das Extrakts von dem zweiten Reservoir zu dem ersten Reservoir fördert.

Bevorzugt weisen die erste Pumpeinrichtung und die zweite Pumpeinrichtung unterschiedliche Förderleistungen auf.

Bei einer bevorzugten Ausführungsform ist die zweite (oder die erste) Fördereinrichtung eine Verdrängerpumpe und insbesondere aus einer Gruppe von Fördereinrichtungen bzw. Verdrängerpumpen ausgewählt, welche Drehkolbenpumpen, Zahnradpumpen, Drehschieberpumpen, Exzenterschneckenpumpen und dergleichen enthält.

Bei einer weiteren bevorzugten Ausführungsform ist die erste (oder die zweite) Fördereinrichtung eine Zentrifugalpumpe und bevorzugt aus einer Gruppe von Zentrifugalpumpen ausgewählt, welche Kreiselpumpen Radialpumpen oder dergleichen enthält.

Bei einer weiteren vorteilhaften Ausführungsform weist die Vorrichtung eine Zerkleinerungseinrichtung zum Zerkleinern des Extrakts auf, wobei bevorzugt dieser Zerkleinerungseinrichtungen einer Fördereinrichtung zum Fördern des Extrakts (in einer Strömungsrichtung des Extrakts) nachgeordnet ist.

Bei dieser Zerkleinerungseinrichtung kann sich beispielsweise um eine Nasszerkleinerer handeln. Dieser zerkleinert bei der Zuführung derartiger Extrakte Störkörper wie beispielsweise Holzstücke oder dergleichen, die sich in den Extrakt befinden können. Diese Störkörper können die anschließende Verteilung des Extrakts behindern. Aus diesem Grunde ist die hier beschriebene Zerkleinerungseinrichtung vorgesehen, welche derartige Störkörper beseitigt oder eben zerkleinert.

Bei einer bevorzugten Ausführungsform weist die Vorrichtung einen Bypass auf, um die Zerkleinerungseinrichtung zu umgehen. Dabei ist es beispielsweise möglich, dass das Extrakt zunächst in das erste Reservoir gefördert wird und dabei zerkleinert wird. In einem Arbeitsbetrieb wäre es dann möglich, diese Zerkleinerungseinrichtung zu umgehen, da diese bereits bei der ersten Zuförderung, das Extrakt bearbeitet bzw. zerkleinert hat.

Bei einer bevorzugten Ausführungsform ist die Zerkleinerungseinrichtung in einem Arbeitsbetrieb wenigstens zeitweise der ersten Fördereinrichtung nachschaltbar, und wenigstens zeitweise einer zweiten Fördereinrichtung nachschaltbar. Dies bedeutet, dass die Zerkleinerungseinrichtung unabhängig davon verwendbar ist, mit welcher der oben genannten Fördereinrichtungen bzw. Pumpeinrichtungen gefördert wird.

Bei einer weiteren vorteilhaften Ausführungsform weist die Vorrichtung eine weitere Verbindungsleitung auf, welche der ersten Fördereinrichtung nachschaltbar ist und welche das Extrakt zu dem ersten Reservoir fördert. Bei dieser Ausgestaltung ist zunächst bevorzugt ein Leitungsabschnitt vorgesehen, der zu wenigstens einer, und bevorzugt zu beiden Pumpeinrichtungen führen kann. Nach den Pumpeinrichtungen erfolgt bevorzugt wieder eine Zusammenführung in eine Leitung und diese kann letztlich in dem ersten Reservoir münden.

Bei der Ventileinrichtung handelt es sich, insbesondere aber nicht ausschließlich um ein Dreiwegeventil. Dabei ist es möglich, dass in einen Befüllungsbetrieb des ersten Reservoirs diese Ventileinrichtung das Extrakt zu dem ersten Reservoir leitet und in einen späteren Arbeitsbetrieb die Ventileinrichtung das Extrakt zu einer Ausbringeinrichtung bzw. einer Vielzahl von Ausbringausgängen leitet.

Bei einer weiteren vorteilhaften Ausführungsform weist die Vorrichtung eine zweite Ventileinrichtung auf, die bevorzugt wenigstens zeitweise der ersten Ventileinrichtung in der Strömungsrichtung des Extrakts nachschaltbar ist.

Bevorzugt handelt es sich hier ebenfalls um ein Dreiwegeventil. Dieses kann beispielsweise eine Zuführung des Extrakts in das erste Reservoir bewirken und wahlweise eine Förderung des Extrakts zu einem Ausbringen aus der Vorrichtung, insbesondere nach deren Benutzung.

Bevorzugt weist die Vorrichtung wenigstens eine weitere Zuführeinrichtung auf, um dem ersten Reservoir und/oder der Vorrichtung das Extrakt zuzuführen. Bevorzugt ist diese weitere Zuführeinrichtung unabhängig von der ersten und/oder bevorzugt von dieser ersten Zuführeinrichtung beabstandet. Damit kann wahlweise über die erste, die zweite oder über beide Zuführeinrichtungen zugeführt werden.

Bevorzugt weist die Vorrichtung eine dritte Zuführeinrichtung auf, über welche dem Reservoir wenigstens mittelbar das Extrakt zuführbar ist. Dabei kann diese dritte Zuführeinrichtung auch durch einen Kran betätigt sein bzw. einen Kran umfassen.

Besonders bevorzugt sind alle Zuführeinrichtungen verschließbar und können insbesondere unabhängig voneinander betrieben (insbesondere geöffnet und geschlossen) werden.

Besonders bevorzugt kann die Vorrichtung in wenigstens drei, bevorzugt in wenigstens vier und bevorzugt in wenigstens fünf verschiedenen Betriebszuständen betrieben werden.

Bevorzugt können dabei wenigstens teilweise jeweils unterschiedliche Fördereinrichtungen eingesetzt werden.

Besonders bevorzugt, handelt es sich bei einem der Betriebszustände um einen Einfüllbetrieb, in dem eine Befüllung des ersten Reservoirs begonnen wird. Hier wird bevorzugt die oben genannte zweite Pumpeneinrichtung eingesetzt, welche im Wesentlichen bewirken soll, dass das Extrakt an der genannten ersten Pumpeneinrichtung anliegt.

Bei einem weiteren Betriebszustand kann es sich um einen Füllbetrieb handeln, wobei das erste Reservoir insbesondere mit der oben genannten ersten Pumpeneinrichtung befüllt wird.

Weiterhin ist bevorzugt ein Ausbringbetrieb vorgesehen, der mit der ersten Pumpe, d.h. insbesondere der stärkeren Pumpe bewirkt werden kann.

Bei einem weiteren Betriebszustand handelt es sich um einen Ausbringbetrieb, der mit den genannten zweiten Förder- oder Pumpeneinrichtung durchgeführt wird.

Bei einem weiteren Betriebszustand handelt es sich um einen Entleerungsbetrieb des Reservoirs, insbesondere nach einer Ausbringung des Extrakts.

Die vorliegende Erfindung ist weiterhin auf ein Verfahren zum Betreiben einer Vorrichtung, wie sie oben beschrieben ist, zum Ausbringen eines fließfähigen Mediums, insbesondere eines Extrakts, auf landwirtschaftliche Nutzflächen gerichtet, wobei die Vorrichtungen ein erstes Reservoir zur Aufnahme des Extrakts aufweist sowie eine Zufuhröffnung, um wenigstens mittelbar diesem ersten Reservoir das Extrakt zuzuführen, sowie auch eine erste Fördereinrichtung, welche wenigstens zeitweise das Extrakt zu dem ersten Reservoir fördert. Dabei wird wenigstens zeitweise das Extrakt von der ersten Zufuhröffnung zu den zweiten Reservoir gefördert, welches in Strömungsverbindung mit der Zufuhröffnung gebracht wird und/oder steht und welches in einer Strömungsrichtung des Extrakts stromaufwärts der Zufuhröffnung angeordnet ist, wobei die erste Fördereinrichtung das Extrakt wenigstens zeitweise von dem zweiten Reservoir zu dem ersten Reservoir fördert

Bei einer weiteren vorteilhaften Ausführungsform fördert wenigstens zeitweise eine zweite Fördereinrichtung das Extrakt von dem zweiten Reservoir zu dem ersten Reservoir. Besonders bevorzugt werden die erste Fördereinrichtung und die zweite Fördereinrichtung unabhängig voneinander betrieben. Besonders bevorzugt wird wenigstens zeitweise nur eine der Förderungseinrichtungen betrieben und bevorzugt wird im Wesentlichen während aller Zeiträume nur eine der Fördereinrichtungen betrieben.

Bei einem weiteren bevorzugten Verfahren wird das Extrakt wenigstens zeitweise zerkleinert, wobei bevorzugt diese Zerkleinerung stromabwärts des zweiten Reservats erfolgt. Bei diesem weiteren Verfahren gelangt das Extrakt bevorzugt zunächst zum zweiten Reservoir und erst dann zu der Zerkleinerungseinrichtung. Besonders bevorzugt ist die Zerkleinerung auch nach der ersten und/oder zweiten Förderereinrichtung bzw. Pumpeneinrichtung angeordnet.

Bei einem weiteren bevorzugten Verfahren wird das Extrakt wenigstens zeitweise von dem ersten Reservoir zu dem zweiten Reservoir gefördert. Diese Förderung wird insbesondere während eines Ausbringbetriebs verwendet.

Weitere Vorteile und Ausführungsformen ergeben sich aus den beigefügten Zeichnungen: Darin zeigen:
- Fig. 1: eine erfindungsgemäße Vorrichtung in einer ersten Ausführungsform;
- Fig. 2: die Vorrichtung aus Fig. 1 in einem ersten Betriebszustand;
- Fig. 3: die Vorrichtung aus Fig. 1 in einem zweiten Betriebszustand;
- Fig. 4: die Vorrichtung aus Fig. 1 in einem dritten Betriebszustand;
- Fig. 5: die Vorrichtung aus Fig. 1 in einem vierten Betriebszustand;
- Fig. 6: die Vorrichtung aus Fig. 1 in einem fünften Betriebszustand
- Fig. 7: eine erfindungsgemäße Vorrichtung in einer weiteren Ausführungsform;
- Fig. 8: eine erfindungsgemäße Vorrichtung in einer weiteren Ausführungsform; und

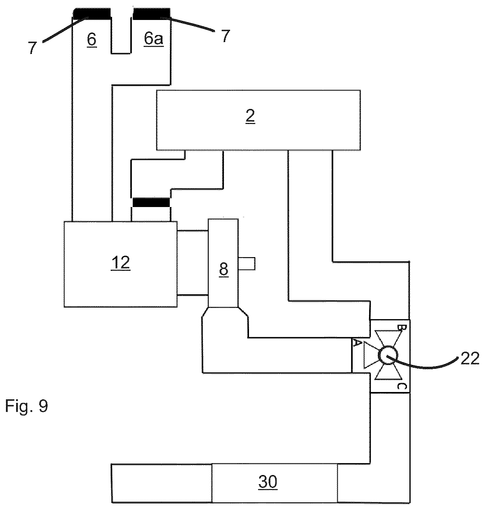

- Fig. 9: eine erfindungsgemäße Vorrichtung in einer weiteren Ausführungsform;

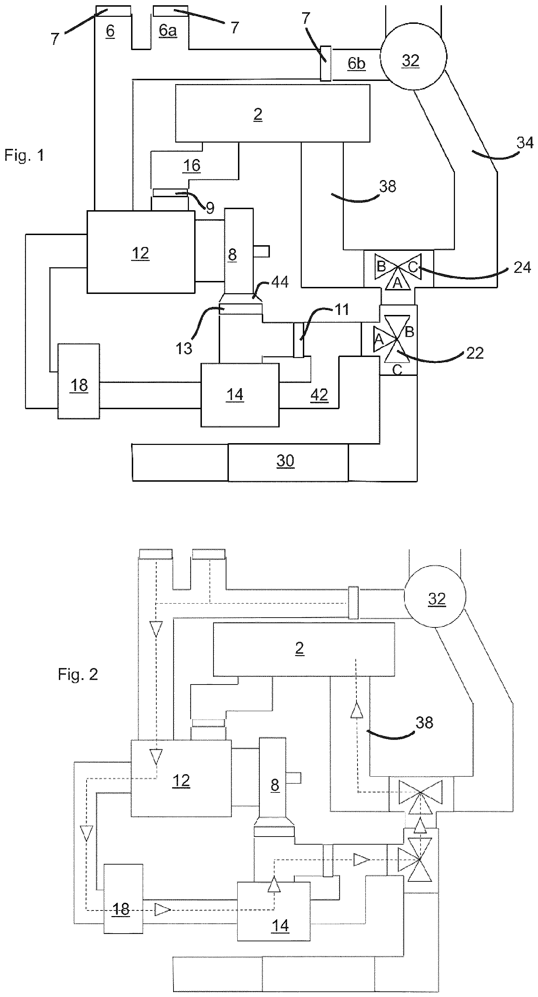

Fig. 1 zeigt eine schematische Darstellung einer erfindungsgemäßen Vorrichtung 1 in einer ersten Ausführungsform. Diese Vorrichtung weist hier drei Zulässe bzw. Eingänge 6, 6a, 6b auf, über welche der Vorrichtung 1 ein Extrakt, beispielsweise Gülle zuführbar ist. Die Bezugszeichen 7 kennzeichnen jeweils optional vorhandene Sperreinrichtungen, etwa in Form von Schiebern, welche geöffnet werden können, um eine Zuführung des Extrakts zu ermöglichen. Dabei sind diese Zulässe 6, 6a, 6b voneinander getrennt und an unterschiedlichen Positionen der Vorrichtung angeordnet.

Das Bezugszeichen 2 kennzeichnet ein Reservoir beispielsweise einen Tank, der mit dem Extrakt zu befüllen ist. Das Bezugszeichen 12 kennzeichnet ein zweites Reservoir, welches hier bevorzugt als Zwischenspeicher ausgeführt ist. Bevorzugt weist dieses zweite Reservoir ein Volumen auf, welches bevorzugt zwischen 2dm³ und 600dm³ liegt.

Das Bezugszeichen 8 bezieht sich auf eine erste Pumpeneinrichtung, welche bevorzugt in einem Arbeitsbetrieb der Vorrichtung 1 zum Fördern des Extrakts dient. Diese zweite Pumpeneinrichtung ist bevorzugt als Kreiselpumpe ausgebildet. Der Vorteil dieser Pumpeneinrichtung 8 besteht in einer hohen Förderleistung.

Das Bezugsteichen 18 kennzeichnet eine zweite Pumpeneinrichtung, welche ebenfalls zum Fördern des Extrakts dient. Diese Pumpeneinrichtung 18 weist zwar bevorzugt eine geringere Förderleistung auf als die erste Pumpeneinrichtung 8, ist aber bevorzugt in der Lage, eine Förderung auch in einem Zustand zu bewirken, in dem noch kein Extrakt an ihr anliegt. So kann es sich bei dieser zweiten Fördereinrichtung beispielsweise um eine Drehkolbenpumpe handeln.

Das Bezugszeichen 14 kennzeichnet eine Zerkleinerungseinrichtung für das Extrakt, etwa einen sog. Nasszerkleinerer. Dieser ist bevorzugt sowohl stromabwärts bezüglich der ersten Pumpeneinrichtung 8 als auch stromabwärts der zweiten Pumpeneinrichtung 18 angeordnet (jeweils bezogen auf die Strömungsrichtung des Extrakts).

Bevorzugt sind die erste Pumpeneinrichtung 8 und die zweite Pumpeneinrichtung 18 jeweils zwischen dem zweiten Reservoir 12 und der Zerkleinerungseinrichtung 18 angeordnet und besonders bevorzugt sind die erste Pumpeneinrichtung 8 und die zweite Pumpeneinrichtung 18 insoweit parallel angeordnet.

Bevorzugt ist das zweite Reservoir 12 in der Strömungsrichtung des Extrakts sowohl vor der ersten Pumpenneinrichtung 8 als auch vor der zweiten Pumpeneinrichtung 18 (insbesondere je nach Arbeitsbetrieb der Vorrichtung)

Das zweite Reservoir 12 weist bevorzugt einen ersten Eingang für das Extrakt auf, über welchen bevorzugt das Extrakt ausgehend von den Zulässen 6, 6a, 6b zugeführt werdenkann.

Bevorzugt weist das zweite Reservoir 12 einen zweiten Eingang auf, über welchen dem zweiten Reservoir bevorzugt das Extrakt ausgehend von dem ersten Reservoir zuführbar ist.

Weiterhin weist bevorzugt das zweite Reservoir 12 einen ersten Ausgang auf, über den das Extrakt zu der ersten Pumpeneinrichtung 8 gelangen kann.

Weiterhin weist bevorzugt das zweite Reservoir 12 einen zweiten Ausgang auf, über den das Extrakt zu der ersten Pumpeneinrichtung 18 gelangen kann.

Ausgehend von der Zerkleinerungseinrichtung 14 gelangt das Extrakt zu einer ersten Ventileinrichtung 22, bei der es sich insbesondere um ein 3-Wege-Ventil handelt. Dabei kann eine erste Verbindungleitung 42 zwischen der Zerkleinerungseinrichtung 14 und dieser Ventileinrichtung 22 verlaufen.

Weiterhin kann eine zweite Verbindungsleitung, (welche bevorzugt als Bypass ausgebildet ist) kann zwischen der ersten Pumpeneinrichtung 8 und der ersten Ventileinrichtung 22 verlaufen.

Die erste Ventileinrichtung 22 erlaubt bevorzugt die Förderung des Extrakts wahlweise zu einer Ausbringleitung 30 (in einem Arbeitsbetrieb der Vorrichtung) oder in Richtung einer zweiten Ventileinrichtung 24.

Diese zweite Ventileinrichtung 24 erlaubt die Förderung des Extrakts wahlweise über eine Förderleitung 38 zu dem ersten Reservoir 2 oder eine Förderung über eine Kranleitung 34 zu einem Kran 32.

Das Bezugszeichen 9 kennzeichnet eine Sperreinrichtung, etwa eine Ventileinrichtung, welche in einer Verbindungsleitung 16 angeordnet ist, welche eine Strömungsverbindung zwischen dem ersten Reservoir 2 und dem zweiten Reservoir 12 herstellt. Mittels dieser Sperreinrichtung 9 kann wahlweise ein Fluss des Extrakts von dem ersten Reservoir 2 zu dem zweiten Reservoir 12 ermöglicht oder verhindert werden.

Das Bezugszeichen 11 kennzeichnet eine weitere Sperreinrichtung, welche hier (insbesondere unmittelbar) nach der ersten Pumpeneinrichtung 8 angeordnet ist.

Das Bezugszeichen 13 kennzeichnet eine weitere Sperreinrichtung mittels derer die Leitung 44 absperrbar ist, welche die erste Pumpeneinrichtung 8 und/oder die zweiten Pumpeneinrichtung 18 mit der ersten Ventileinrichtung 22 verbindet.

Fig. 2 zeigt einen Zustand, bei dem ein Ansaugen des Extrakts erfolgt, Dieses kann, wie oben erwähnt, wahlweise über einen oder mehrere der der Zulässe 6, 6a oder 6b zugeführt werden. Die gestrichelte Linie zeigt gemeinsam mit den Pfeilen die Flussrichtung des Extrakts an.

Dabei ist die erste Ventileinrichtung 22 derart eingestellt, dass das Extrakt von dem Eingang A zu dem Ausgang B strömt. Auch die zweite Ventileinrichtung 24 ist so eingestellt, dass das Extrakt von dem Eingang A zu dem Ausgang B strömt.

Damit gelangt in Fig. 2 das Extrakt zunächst zu dem zweiten Reservoir und ein Teil von dort zu der zweiten Pumpeneinrichtung 18 und die Zerkleinerungseinrichtung 14.

Die zweite Pumpeneinrichtung 18 läuft an und füllt die Vorrichtung bzw. das System. Die zweite Pumpeneinrichtung ist bevorzugt derart gestaltet, dass sie einen Unterdruck erzeugen kann.

Bevorzugt läuft in diesem Zustand auch die erste Pumpeneinrichtung 8 wobei jedoch die Sperreinrichtung 11 geschlossen ist, so dass die zweite Pumpeneinrichtung 18 nicht in einem kleinen Kreislauf umherpumpt.

Nach einer vorgegebenen Zeit öffnet sich die Sperreinrichtung 11 stromabwärts der ersten Pumpeneinrichtung 8. Dieses Öffnen kann dabei nach einer vorgegebenen Zeit erfolgen und/oder es ist bevorzugt eine Sensoreinrichtung vorgesehen, welche einen entsprechenden Durchfluss durch die Pumpeneinrichtung 8 oder einen an der Pumpeneinrichtung 8 anliegenden Druck feststellt.

In diesem Zustand kann die zweite Pumpeneinrichtung 18 anhalten. In diesem Fall ist keine Sperreinrichtung nötig, da diese zweite Pumpeneinrichtung in sich dicht ist und daher (insbesondere bei Stillstand) selbst als Sperreinrichtung wirkt.

Die mit den Pfeilen versehene gestrichelte Linie zeigt hier (und auch in den nachfolgenden Figuren den Strom des Extrakts durch die Vorrichtung 1 an.

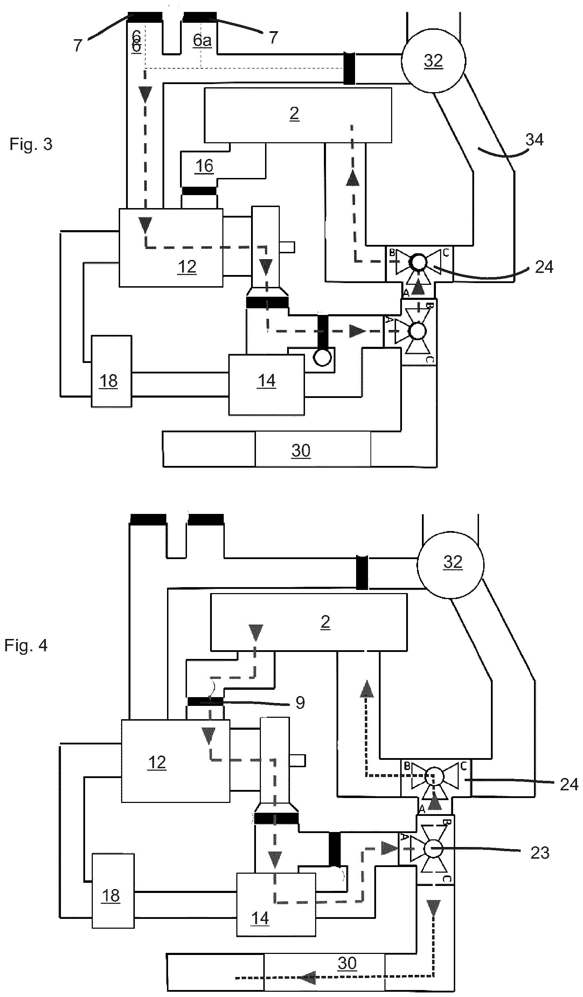

Fig. 3 zeigt die in Fig 1. gezeigte Vorrichtung in einem weiteren Betriebszustand. Hier fördert nur noch die erste Pumpeneinrichtung 8 und das erste Reservoir wird über die Zuleitung 38 gefüllt. In dieser Situation ist die Sperreinrichtung 9 geschlossen und die Sperreinrichtung 11 geöffnet oder geschlossen. Auch ist hier bevorzugt die Sperreinrichtung 13 geöffnet, so dass bevorzugt das Extrakt unmittelbar von der ersten Pumpeneinrichtung 8 zu der Ventileinrichtung 22 gelangt.

Fig. 4 zeigt einen Betriebszustand der erfindungsgemäßen Vorrichtung 1. Hier erfolgt ein Ausbringen des Extrakts beispielsweise auf eine landwirtschaftliche Nutzfläche.

In dieser Betriebssituation ist die Sperreinrichtung 9 geöffnet und das Extrakt gelangt von dem ersten Reservoir über das zweite Reservoir 12 und die Zerkleinerungseinrichtung 14 (gefördert durch die erste Pumpeneinrichtung) zu der Ventileinrichtung 22. Die erste Ventileinrichtung übernimmt hier die Regulierung der Ausbringmenge, indem sie dass Extrakt auf die beiden Ausgänge B und C aufteilt.

. Bevorzugt ist eine Durchflussmeingenmesseinrichtung in einer Ausbringleitung und/oder in einem Bereich der ersten Ventileinrichtung 22 angeordnet

Bevorzugt sind in diesem Betriebszustand die drei Sperreinrichtungen 6, 6a und 6b geschlossen.

Bevorzugt fördert bzw. leitet die zweite Ventileinrichtung 24 das Extrakt zu dem Ausgang B, der wiederum zu dem ersten Reservoir 2 führt.

Die Sperreinrichtung 11 ist hier bevorzugt geschlossen, sodass das Extrakt über die Zerkleinerungseinrichtung 14 geleitet wird.

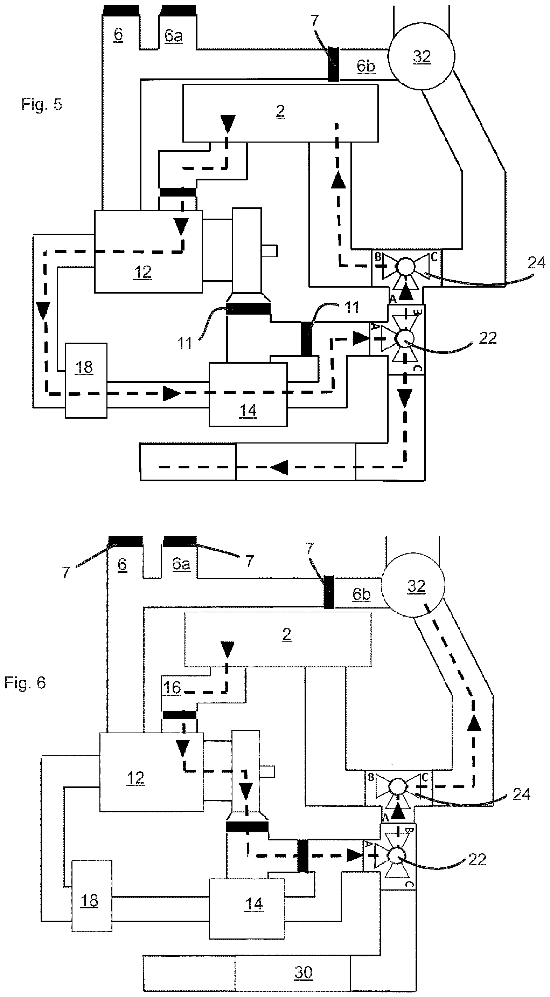

Fig. 5 zeigt einen weiteren Betriebszustand, bei dem ebenfalls das Extrakt ausgebracht wird. Bei der in Fig. 4 gezeigten Situation wird jedoch das Extrakt von der zweite Pumpeneinrichtung 18 gefördert, verläuft jedoch auch hier wieder durch die Zerkleinerungseinrichtung 14.

Bei der in Fig. 6 gezeigten Betriebssituation erfolgt eine Entleerung des ersten Reservoirs 2 mittels der ersten Pumpeinrichtung 8. Die Sperreinrichtung 13 ist hier geöffnet so dass das Extrakt nicht über die Zerkleinerungseinrichtung 14 geführt wird. Die zweite Ventileinrichtung 24 ist hier derart geschaltet, dass das Extrakt in Richtung des Krans 32 geführt wird.

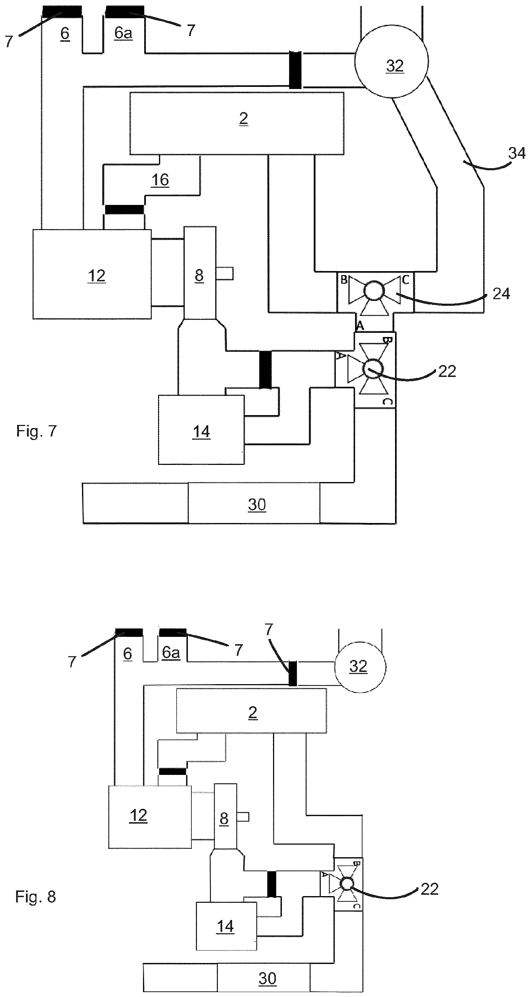

Fig. 7 zeigt eine weitere jedoch vereinfachte Ausführungsform der vorliegenden Erfindung. Hier ist nur eine Pumpeneinrichtung, nämlich die erste Pumpeneinrichtung 8 vorgesehen.

Diese Ausführungsform ist denkbar, wenn ein Ansaugen des Extrakts aus der dem ersten Reservoir nicht notwendig ist. Im übrigen entspricht die in Fig. 6 gezeigte Vorrichtung der in Fig. 1 gezeigten Vorrichtung.

Fig. 8 zeigt eine weitere Ausgestaltung ähnlich der in Fig. 6 gezeigten Ausführungsform. Hier wird jedoch zusätzlich noch auf die Möglichkeit einer Kranentleerung verzichtet und damit auch auf die zweite Ventileinrichtung 24.

Fig. 8 zeigt eine weiter vereinfachte Ausgestaltung der erfindungsgemäßen Vorrichtung. Hier wurde weiterhin auf die Zerkleinerungseinrichtung 14 verzichtet.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Ausbringen eines Extrakts auf landwirtschaftliche Nutzflächen mit einer Ausbringeinrichtung (30), mit einem ersten Reservoir (2) zur Aufnahme des Extrakts, mit einer Zuführöffnung (6), um dem ersten Reservoir (2) das Extrakt zuzuführen, mit einer ersten Fördereinrichtung (8), um das Extrakt zu dem ersten Reservoir (2) zu fördern, wobei der ersten Fördereinrichtung (8) eine Ventileinrichtung (22) nachgeordnet ist, welche dazu geeignet und bestimmt ist, Extrakt wahlweise zu dem ersten Reservoir (2) oder zu der Ausbringeinrichtung (30) zu fördern und mit einem zweiten Reservoir (12), welches in Strömungsverbindung mit der Zuführöffnung (6) bringbar ist, und welches in einer Strömungsrichtung des Extrakts stromabwärts der Zuführöffnung (6) angeordnet ist, wobei die erste Fördereinrichtung (8) dazu geeignet und bestimmt ist, das Extrakt wenigstens zeitweise von dem zweiten Reservoir (12) zu dem ersten Reservoir (2) zu fördern,
wobei die Vorrichtung eine Förderleitung (16) aufweist,
**dadurch gekennzeichnet, dass** die Förderleitung (16) dazu geeignet und bestimmt ist, das Extrakt wenigstens zeitweise von dem ersten Reservoir (2) zu dem zweiten Reservoir (12) zu fördern, wobei das zweite Reservoir (12) tiefer angeordnet ist als das erste Reservoir (2), und wobei diese Förderleitung (16) absperrbar ist, derart dass das Extrakt nicht zwischen dem ersten Reservoir (2) und dem zweiten Reservoir (12) durch die Förderleitung (16) strömen kann.

2. Vorrichtung (1) nach wenigstens einem der vorangegangenen Ansprüche,
**dadurch gekennzeichnet, dass**
die Vorrichtung (1) eine zweite Fördereinrichtung (18) zum Fördern des Extrakts aufweist, wobei bevorzugt die erste Fördereinrichtung (8) und die zweite Fördereinrichtung (18) parallel zueinander angeordnet sind.

3. Vorrichtung (1) nach Anspruch 2,
**dadurch gekennzeichnet, dass**
die erste Fördereinrichtung (8) und die zweite Fördereinrichtung (18) nach unterschiedlichen Wirkprinzipien arbeiten.

4. Vorrichtung (1) nach wenigstens einem der vorangegangenen Ansprüche 2 - 3 **dadurch gekennzeichnet, dass**
die erste Fördereinrichtung (8) aus einer Gruppe von Fördereinrichtungen ausgewählt ist, welche Verdrängerpumpen, insbesondere Drehkolbenpumpen, Zahnradpumpen, Drehschieberpumpen oder Exzenterschneckenpumpen und dergleichen enthält und/oder die zweite Fördereinrichtung (18) aus einer Gruppe von Fördereinrichtungen ausgewählt ist, welche Zentrifugalpumpen, insbesondere Kreiselpumpen enthält und dergleichen.

5. Vorrichtung (1) nach wenigstens einem der vorangegangenen Ansprüche 2 - 4, **dadurch gekennzeichnet, dass**
die Vorrichtung (1) eine Zerkleinerungseinrichtung (14) zum Zerkleinern des Extrakts aufweist, wobei bevorzugt diese Zerkleinerungseinrichtung (14) einer der ersten oder der zweiten Fördereinrichtung (8, 18) zum Fördern des Extrakts nachgeordnet ist.

6. Vorrichtung (1) nach dem vorangegangenen Anspruch,
**dadurch gekennzeichnet, dass**
die Zerkleinerungseinrichtung (14) in einem Arbeitsbetrieb wenigstens zeitweise der ersten Fördereinrichtung (8) nachschaltbar ist und wenigstens zeitweise der zweiten Fördereinrichtung (18) nachschaltbar ist.

7. Vorrichtung (1) nach wenigstens einem der vorangegangenen Ansprüche,
**dadurch gekennzeichnet, dass**
die Vorrichtung (1) eine weitere Verbindungsleitung (38) aufweist, welche der ersten Fördereinrichtung (8) nachschaltbar ist und welche das Extrakt zu dem ersten Reservoir (2) fördert.

8. Vorrichtung (1) nach dem vorangegangenen Anspruch,
**dadurch gekennzeichnet, dass**
die Vorrichtung (1) eine zweite Ventileinrichtung (24) aufweist, die bevorzugt wenigstens zeitweise der ersten Ventileinrichtung (22) in der Strömungsrichtung des Extrakts nachschaltbar ist.

9. Vorrichtung (1) nach dem vorangegangenen Anspruch,
**dadurch gekennzeichnet, dass**
die Vorrichtung (1) wenigstens eine weitere Zuführöffnung (6a, 6b) aufweist, um dem ersten Reservoir (2) das Extrakt zuzuführen.

10. Verfahren zum Betreiben einer Vorrichtung (1) gemäß einem der vorangegangenen Ansprüche zum Ausbringen eines fließfähigen Mediums insbesondere eines Extrakts auf landwirtschaftliche Nutzflächen mit einem ersten Reservoir (2) zur Aufnahme des Extrakts, mit einer Zuführöffnung (6), um dem ersten Reservoir (2) das Extrakt zuzuführen und mit einer ersten Fördereinrichtung (8), welche das Extrakt zu dem ersten Reservoir (2) fördert, wobei wenigstens zeitweise das Extrakt von der ersten Zuführöffnung (6) zu einem zweiten Reservoir (12) gefördert wird, welches in Strömungsverbindung mit der Zuführöffnung (6) gebracht wird und/oder steht und welches in einer Strömungsrichtung des Extrakts stromabwärts der Zuführöffnung (6) angeordnet ist, wobei die erste Fördereinrichtung (8) das Extrakt wenigstens zeitweise von dem zweiten Reservoir (12) zu dem ersten Reservoir (2) fördert,

11. Verfahren nach Anspruch 10,
**dadurch gekennzeichnet, dass**
wenigstens zeitweise eine zweite Fördereinrichtung (18) das Extrakt von dem zweiten Reservoir (12) zu dem ersten Reservoir (2) fördert.

12. Verfahren nach wenigstens einem der vorangegangenen Ansprüche 10 - 11,
**dadurch gekennzeichnet, dass**
das Extrakt wenigstens zeitweise zerkleinert wird, wobei bevorzugt diese Zerkleinerung bevorzugt stromabwärts des zweiten Reservoirs (12) erfolgt und/oder das Extrakt wenigstens zeitweise von dem ersten Reservoir (2) zu dem zweiten Reservoir (12) gefördert wird.

## Claims

1. Device (1) for spreading an extract to agricultural land, having an spreading mechanism (30), having a first reservoir (2) for receiving the extract, having a feed opening (6) for feeding the extract to the first reservoir (2), having a first conveying device (8) for conveying the extract to the first reservoir (2), the first conveying device (8) being followed by a valve means (22) which is suitable and intended for conveying extract selectively to the first reservoir (2) or to the spreading mechanism (30) and with a second reservoir (12) which can be brought into flow connection with the feed opening (6) and which is arranged downstream of the feed opening (6) in a flow direction of the extract, the first conveying device (8) being suitable and intended for conveying the extract at least temporarily from the second reservoir (12) to the first reservoir (2), wherein the device having a conveying line (16),
**characterized in that**
the conveying line (16) is suitable and intended for conveying the extract at least temporarily from the first reservoir (2) to the second reservoir (12), wherein the second reservoir (12) is arranged lower than the first reservoir (2), and wherein this conveying line (16) can be shut off such that the extract cannot flow through the conveying line (16) between the first reservoir (2) and the second reservoir (12).

2. Device (1) according to at least one of the preceding claims,
**characterized in that**
the device (1) has a second conveying device (18) for conveying the extract, the first conveying device (8) and the second conveying device (18) preferably being arranged parallel to one another.

3. Device (1) according to claim 2,
**characterized in that**
the first conveying device (8) and the second conveying device (18) operate according to different operating principles.

4. Device (1) according to at least one of the preceding claims 2 - 3
**characterized in that**
the first conveying device (8) is selected from a group of conveying devices which includes displacement pumps, in particular rotary piston pumps, gear pumps, rotary vane pumps or eccentric screw pumps and the like, and/or the second conveying device (18) is selected from a group of conveying devices which includes centrifugal pumps, in particular rotary pumps, and the like.

5. A device (1) according to at least one of the preceding claims 2-4,
**characterized in that**
the device (1) comprises a comminuting device (14) for comminuting the extract, wherein preferably this comminuting device (14) is arranged downstream of one of the first or second conveying devices (8, 18) for conveying the extract.

6. Device (1) according to the preceding claim,
**characterized in that**
the comminuting device (14) can be connected at least temporarily downstream of the first conveying device (8) during a working operation and can be connected at least temporarily downstream of the second conveying device (18).

7. Device (1) according to at least one of the preceding claims,
**characterized in that**
the device (1) has a further connecting line (38) which can be connected downstream of the first conveying device (8) and which conveys the extract to the first reservoir (2).

8. Device (1) according to the preceding claim,
**characterized in that**
the device (1) has a second valve means (24) which is preferably connectable at least temporarily downstream of the first valve means (22) in the flow direction of the extract.

9. Device (1) according to the preceding claim,
**characterized in that**
the device (1) has at least one further feed opening (6a, 6b) for feeding the extract to the first reservoir (2).

10. A method of operating a device (1) according to one of the preceding claims for spreading a flowable medium, in particular an extract, to agricultural land, comprising a first reservoir (2) for receiving the extract, a feed opening (6) for feeding the extract to the first reservoir ( 2) and with a first conveying device (8) which conveys the extract to the first reservoir (2), wherein at least some of the extract is conveyed from the first feed opening (6) to a second reservoir (12) which is and/or is brought into flow connection with the feed opening (6) and which is arranged in a flow direction of the extract downstream of the feed opening (6), wherein the first conveying device (8) at least temporarily conveying the extract from the second reservoir (12) to the first reservoir (2).

11. A method according to claim 10,
**characterized in that**
at least temporarily a second conveying device (18) conveys the extract from the second reservoir (12) to the first reservoir (2).

12. A method according to at least one of the preceding claims 10-11,
**characterized in that**
the extract is at least temporarily comminuted, wherein said comminution preferably occurs downstream of the second reservoir (12) and/or the extract is at least temporarily conveyed from the first reservoir (2) to the second reservoir (12).

## Revendications

1. Dispositif (1) pour épandre un extrait sur des surfaces agricoles utiles avec un dispositif d'épandage (30), avec un premier réservoir (2) pour recevoir l'extrait, avec une ouverture d'alimentation (6) pour amener l'extrait au premier réservoir (2), avec un premier dispositif de transport (8) pour transporter l'extrait vers le premier réservoir (2), un dispositif de soupape (22) étant disposé en aval du premier dispositif de transport (8), lequel dispositif de soupape est approprié et déterminé pour cela, de transporter sélectivement l'extrait vers le premier réservoir (2) ou vers le dispositif d'épandage (30), et avec un deuxième réservoir (12) qui peut être mis en communication d'écoulement avec l'ouverture d'alimentation (6) et qui est disposé en aval de l'ouverture d'alimentation (6) dans une direction d'écoulement de l'extrait, le premier dispositif de transport (8) étant adapté et destiné à transporter l'extrait au moins temporairement du deuxième réservoir (12) vers le premier réservoir (2), le dispositif comprenant une conduite de transport (16),
**caractérisé en ce que**
la conduite de transport (16) est appropriée et destinée à transporter l'extrait au moins temporairement du premier réservoir (2) au deuxième réservoir (12), le deuxième réservoir (12) étant disposé plus bas que le premier réservoir (2), et cette conduite de transport (16) pouvant être fermée, de sorte que l'extrait ne peut pas s'écouler entre le premier réservoir (2) et le deuxième réservoir (12) à travers la conduite de transport (16).

2. Dispositif (1) selon au moins l'une des revendications précédentes,
**caractérisé en ce que**
le dispositif (1) comporte un deuxième dispositif de transport (18) pour transporter l'extrait, le premier dispositif de transport (8) et le deuxième dispositif de transport (18) étant de préférence disposés parallèlement l'un à l'autre.

3. Dispositif (1) selon la revendication 2,
**caractérisé en ce que**
le premier dispositif de transport (8) et le deuxième dispositif de transport (18) fonctionnent selon des principes de fonctionnement différents.

4. Dispositif (1) selon au moins l'une des revendications 2 à 3 précédentes.
**caractérisé en ce que**
le premier dispositif de transport (8) est choisi parmi un groupe de dispositifs de transport qui contient des pompes volumétriques, en particulier des pompes à piston rotatif, des pompes à engrenages, des pompes à palettes ou des pompes à vis excentrée et similaires, et/ou le deuxième dispositif de transport (18) est choisi parmi un groupe de dispositifs de transport qui contient des pompes centrifuges, en particulier des pompes centrifuges et similaires.

5. Dispositif (1) selon au moins l'une des revendications 2 à 4 précédentes,
**caractérisé en ce que**
le dispositif (1) comporte un dispositif de broyage (14) pour broyer l'extrait, ce dispositif de broyage (14) étant de préférence placé en aval d'un des premiers ou des deuxièmes dispositifs de transport (8, 18) pour transporter l'extrait.

6. Dispositif (1) selon la revendication précédente,
**caractérisé en ce que**
le dispositif de broyage (14) peut être placé en aval du premier dispositif de transport (8) au moins temporairement dans un mode de travail et peut être placé en aval du deuxième dispositif de transport (18) au moins temporairement.

7. Dispositif (1) selon au moins l'une des revendications précédentes,
**caractérisé en ce que**
le dispositif (1) comporte une autre conduite de liaison (38) qui peut être branchée en aval du premier dispositif de transport (8) et qui transporte l'extrait vers le premier réservoir (2).

8. Dispositif (1) selon la revendication précédente,
**caractérisé en ce que**
le dispositif (1) comporte un deuxième dispositif de soupape (24) qui peut de préférence être monté au moins temporairement en aval du premier dispositif de soupape (22) dans le sens d'écoulement de l'extrait.

9. Dispositif (1) selon la revendication précédente,
**caractérisé en ce que**
le dispositif (1) présente au moins une autre ouverture d'alimentation (6a, 6b) pour amener l'extrait au premier réservoir (2).

10. Procédé d'exploitation d'un dispositif (1) selon l'une des revendications précédentes pour l'épandage d'un milieu fluide, en particulier d'un extrait, sur des surfaces agricoles utiles, avec un premier réservoir (2) pour recevoir l'extrait, avec une ouverture d'alimentation (6) pour amener l'extrait au premier réservoir (2) et avec un premier dispositif de transport (8) qui transporte l'extrait vers le premier réservoir (2), dans lequel, au moins temporairement, l'extrait est transporté de la première ouverture d'alimentation (6) vers un deuxième réservoir (12) qui est amené et/ou se trouve en communication d'écoulement avec l'ouverture d'alimentation (6) et qui est disposé en aval de l'ouverture d'alimentation (6) dans une direction d'écoulement de l'extrait, le premier dispositif de transport (8) transportant l'extrait au moins temporairement du deuxième réservoir (12) vers le premier réservoir (2),

11. Procédé selon la revendication 10,
**caractérisé en ce que**
au moins temporairement, un deuxième dispositif de transport (18) transporte l'extrait du deuxième réservoir (12) vers le premier réservoir (2).

12. Procédé selon au moins l'une des revendications 10 à 11 précédentes,
**caractérisé en ce que**
l'extrait est broyé au moins temporairement, de préférence ce broyage étant effectué de préférence en aval du deuxième réservoir (12) et/ou l'extrait est transporté au moins temporairement du premier réservoir (2) vers le deuxième réservoir (12).
